# EUROPEAN PATENT APPLICATION

(11) **EP 0 748 832 A2**
(43) Date of publication of application: **18.12.1996**
(21) Application number: 96302658.8
(22) Date of filing: 17.04.1996
(51) Int. Cl.: C08J 3/03, C08G 77/06

(54) **Emulsion polymerized silicone lattices and elastomeric film products**

(30) Priority: 27.04.1995 US 430769
(71) Applicant: DOW CORNING CORPORATION, Midland, Michigan 48686-0994 (US)
(72) Inventor: Joffre, Eric Jude, Midland, Michigan 48642 (US); Kalinowski, Robert Edward, Auburn, Michigan 48611 (US)
(74) Representative: Lewin, John Harvey

(57) **Abstract**

Physical properties of aqueous polydiorganosiloxane dispersions such as freeze/thaw stability and the physical properties of elastomeric films derived from these dispersions, such as high temperature stability and clarity, are improved by selecting an appropriate surfactant with specific characteristics. The polydiorganosiloxane emulsion is formed via an emulsion polymerization process.

## Description

This invention relates to polydiorganosiloxane dispersions and to elastomeric film derived therefrom having improved physical properties including freeze/thaw stability, high temperature stability and clarity.

The present invention teaches the physical properties of aqueous polydiorganosiloxane dispersions such as freeze/thaw stability and the physical properties of elastomeric films derived from such dispersions, like high temperature stability and clarity, are enhanced by selecting an appropriate surfactant with specific characteristics. Herein, the polydiorganosiloxane emulsion is formed via an emulsion polymerization process. In particular, we have surprisingly found that the freeze/thaw properties of the polydiorganosiloxane dispersion are improved by selecting certain surfactants which emulsify the polydiorganosiloxane. The high temperature stability and clarity of elastomers formed from the dispersion are improved by surfactants which do not form siloxane redistribution catalysts at temperatures above 100°C. and surfactants where the refractive index of the crosslinked siloxane phase and the surfactant/residual water phase are matched.

The polydiorganosiloxane dispersions of the present invention are well known in the art and are formed through the process of emulsion polymerization or direct emulsification. In emulsion polymerization, a low viscosity hydroxyl endblocked siloxane oligomer is converted to a high viscosity fluid or gum by polymerization within the latex particles. The process is well known to those skilled in the art and is generally taught in U.S. Patents 2,891,920, 3,294,725, 3,355,406, 3,360,491 and 3,697,496 which demonstrate the appropriate emulsion polymerization techniques.

The emulsion polymerization process is typically described as preparing a water/surfactant mixture, then adding a hydroxyl endblocked siloxane oligomer thereto to form a premixture. Thereafter, the premixture is mixed at a high shear to form an emulsion. The emulsion is then allowed to polymerize to form an emulsion polymer. Next, the emulsion polymer is neutralized after the polymerization is substantially complete. The catalyzation of the emulsion polymer can occur before or after mixing of the premixture at high shear to form an emulsion. This catalyzation is done by any number of methods known in the art. After preparation of the emulsion polymer, it is transformed into a dispersion by adding a crosslinker and optionally, adding a catalyst, fillers, thickeners, adhesion promoters, stabilizers and reinforcing agents. Finally, the water in the mixture is evaporated to form an elastomeric film.

The water/surfactant mixture is present in an amount of between 25% and 99% by weight of the total mixture, while the hydroxyl endblocked siloxane oligomer is present in an amount between 1% and 75% by weight of the premixture. The weight ratio of surfactant to siloxane oligomer is in the range of 0.5 to 15%. The selection of the particular surfactant used in the water/surfactant mixture is critical to the present invention.

The hydroxyl endblocked siloxane oligomer used in the formulation of our premixture is of the formula RₙSiO₄₋ₙ/2 in which R is a monovalent hydrocarbon radical, a halogenated monovalent hydrocarbon radical or hydrogen atom and n has an average value from 1 to less than 3. Thus, the employable siloxanes range from resinous materials having an average of one R group per silicon up to fluid, end-blocked polymers having an average of greater than two R groups per silicon. The viscosity of the starting siloxane is not critical. If the viscosity is too high for adequate dispersion of the siloxane, a small amount of solvent is optionally employed, which may subsequently be removed if desired, before polymerization begins. It should be understood that the method of this invention applies equally well to the preparation of homopolymeric siloxanes and to the preparation of copolymeric siloxanes. Thus, one might polymerize an organosiloxane of the formula R₂SiO, such as dimethylsiloxane, or one may copolymerize mixtures of siloxanes of the formulae RSiO_{1.5}, R₂SiO and R₃SiO₅ where R is defined as above.

For this invention, the hydroxyl endblocked siloxane oligomer can be substituted with any monovalent hydrocarbon radical such as alkyl radicals of methyl, ethyl and octadecyl; alkenyl radicals such as vinyl, allyl and hexenyl; cycloaliphatic radicals such as cyclohexyl or cyclohexenyl; aryl hydrocarbon radicals such as phenyl, tolyl and xenyl; and alkaryl hydrocarbon radicals such as benzyl; halogenated monovalent hydrocarbon radicals such as chlorophenyl, alpha, alpha, alpha-trifluorotolyl, trifluorovinyl, trifluorochlorocyclobutyl and tetrabromoxenyl. The R groups on the siloxane can also be hydrogen atom, although preferably there is not more than one hydrogen atom per silicon atom.

The premixture constituting water, surfactant and hydroxyl endblocked siloxane oligomer is mixed at a high shear to form an emulsion. The mixing can take place in any type of commercial mixing equipment, said mixers being well known to those skilled in the art. Particularly useful are homogenizers, colloid mills, sonolaters, microfluidizers and the like. The premixture is mixed until an emulsion is formed to have particle sizes of between 100-5000 nm, a preferred range of 200-2000 nm and a most preferred range of 300-800 nm.

After mixing, the emulsion is allowed to polymerize to form an emulsion polymer. Polymerization of the hydroxyl endblocked siloxane oligomer proceeds satisfactorily at room temperature, but may also be carried out at any desired temperature. Preferably, this temperature is below the boiling point of water although if desired, temperatures above 100°C. can be employed if the polymerization is carried out in a closed system. The preferred temperature range is from 25° to 80°C.

The time of polymerization is not critical but will vary depending upon the speed of the reaction and the viscosity desired in the resulting siloxane. Generally, the polymerization process will take from 1 to 24 hours. The time may also be regulated by the particle size desired in the finished emulsion. It has been found that as the polymerization proceeds, the viscosity of the siloxane will increase and the size of the emulsion droplets will decrease. A combination of these two processes is believed to result in extremely stable emulsions.

The emulsion polymer is neutralized after the polymerization is substantially complete. The emulsion polymer is neutralized using any organic or inorganic base to adjust the pH of the emulsion polymer to between 4.5 to 11.5. To achieve neutral emulsions the base will be added in an equimolar amount comparable to the amount of surfactant present in the mixture. Typical inorganic bases are ammonium hydroxide, sodium hydroxide, potassium hydroxide or other bases using Group IA or IIA elements. Typical organic bases include diethyl amine or diethanol amine.

The premixture can be acid catalyzed prior to or after mixing the premixture at high shear to form the emulsion. The premixture can be acid catalyzed by passing the surfactant alone, the mixture of water and surfactant or the mixture of water, surfactant and hydroxyl endblocked oligomer, through an ion exchange resin. The techniques for acid catalyzing a surfactant in such a process are disclosed in U.S. Patent 3,697,469.

As the organosiloxane emulsion is passed through a layer of the cationic exchange resin, the ion exchange resin rapidly exchanges ions with the above-mentioned anionic surfactant which is present on the surface of the emulsion particle in the form of salt and turns it into a surfactant of corresponding acid type. Thus, the surfactant functions as both a catalyst and an emulsifier. If the occasion demands, other polymerizing catalysts may also be employed.

Any commercially available cationic exchange resin may be employed but it is preferable to choose a resin of acid type which has ion exchange radicals attached to its structure, e.g., a cationic exchange resin having strong acidic sulfonic radicals or preferably a cationic exchange resin of MR (macroreticular) type, having within it a large network structure. In comparison with ordinary gel-type ion exchange resins, the ion-exchange resin of MR type exhibits smaller expansion or contraction and has greater mechanical strength. Therefore, it can be handled as a dry resin.

After preparation of the emulsion polymer, the emulsion polymer is transformed into a dispersion by adding a crosslinker and optionally, adding a catalyst, fillers, (such as calcium carbonate, alumina trihydrate and clays), thickeners, adhesion promoters, stabilizers and reinforcing agents. Finally, the water in the mixture may be evaporated to form an elastomeric film.

Selection of the surfactant of the water/surfactant mixture described above is the crux of the present invention. We have surprisingly found that particular surfactants, selected from a certain class of surfactants, will give dispersions or elastomeric films formed therefrom which have improved physical properties.

For example, improved freeze/thaw stability is achieved though the judicious selection of a particular anionic surfactant. In general, surfactants improve the freeze/thaw properties of our resulting dispersions if the surfactant emulsifies the polydiorganosiloxane and if the surfactant is not selected from the group of surfactants comprising alkyl sulfates, linear alkylbenzene sulfonates, alkyl sulfonates and taurates. If the appropriate surfactant is chosen, filler may also be omitted from our dispersion in order to improve freeze/thaw stability. The surfactants which achieve desirable freeze/thaw results include anionic surfactants, such as sulfosuccinamates, paraffin sulfonates, phosphoric esters and carboxylates. These anionic surfactants or classes of surfactants favorably influence the number of freeze/thaw cycles.

Freeze/thaw stability is tested herein by subjecting the dispersion in its original container to 10 freeze/thaw cycles, each cycle consisting of 16 hours of a freeze segment at -17°C. ± 1°C. (0°F. ± 2°F.) and 8 hours of a thaw segment at 23°C. ± 1°C. (73.4°F. ± 2°F.). After each cycle, a portion of the dispersion was extruded and examined for appearance changes. If the extrudate was equivalent to the original unfrozen sealant by not exhibiting coagulation, gelation, separation or other manifestations of instability, the sample was deemed to pass the freeze/thaw cycle.

Appropriate selection of the surfactant in the present invention can also influence the thermal stability of the elastomeric film resulting from the evaporation of water from the dispersion. Through the judicious selection of surfactant, specifically one whose degradation products at high temperature (such as greater than 100°C.) do not include siloxane redistribution catalysts, heat stable elastomers from aqueous siloxane dispersions are made. In some circumstances, it may also be necessary to exclude fillers to acheive optimum thermal stability.

The best types of surfactants which are used to improve the thermal stability are anionic surfactants which at elevated temperatures do not form siloxane redistribution catalysts. Specifically, the species which form siloxane redistribution catalysts include: 1) strong acidic species such as H₂SO₄, HSO₄Na, H₃PO₄, H₂PO₄Na or 2) strong basic species such as NaOH, KOH and LiOH. Within the class of anionic surfactants, carboxylate and sulfonate based surfactants are most preferred.

Specifically, particular anionic surfactants herein include monovalent alkyl carboxylates; polyvalent alkyl carboxylates; acyl lactylates; alkyl ether carboxylates; n-acyl sarcosinate; n-acyl glutamates and fatty acid - polypeptide condensates. Other anionic surfactants are ester linked sulfonates such as alkyl sulfoesters; taurates; sulfosuccinates such as monoester, diester (both symmetrical and unsymmetrical), ethoxylated monoalkyl sulfosuccinates, alkyl amide 1/2 ester sulfosuccinate (mono/di M⁺) such as 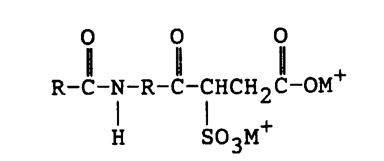 where M⁺ is Na⁺, Li⁺, K⁺ or H⁺ and ethoxylated amide sulfosuccinates; sulfosuccinamates; sulfonated ethers, (Na cocoglycerol ether sulfonate); linear alkylbenzenesulfonates; benzene, toluene, xylene, cumene sulfonate; ligninsulfonates such as sulfonated polymers having number average molecular weights of 1000-20,000; petroleum sulfonates, such as petroleum fractions of differing molecular weights reacted with oleum or H₂SO₄ to sulfonate; paraffin sulfonates, such as sulfoxidation of n-paraffins via UV/SO₃ secondary alkane sulfonates C₁₄-C₁₈ (e.g. Hoechst™ SAS); α-olefin sulfonates; alkylnapthalenesulfonates; diphenyl oxide sulphonates and linear alkylpolyethersulfonates.

The selection of the surfactant in the present invention also influences the clarity of the elastomeric film resulting from the evaporation of water from the dispersion. To obtain clear elastomers from silicone latices, the refractive indices must be matched in the final film between the crosslinked siloxane phase and the surfactant/residual water phase. The term "crosslinked siloxane phase" refers to the plurality of crosslinked siloxane particles remaining after water has evaporated to form an elastomeric film. The term "surfactant/residual water phase" refers to amount of residual surfactant and water remaining in the elastomeric film after the evaporation of substantially all of the water from the dispersion. Fillers are typically absent in clear formulations.

In the absence of refractive index additives, this can be accomplished by using anionic surfactants with the following structure R'-Z where R' is an aliphatic hydrocarbon group having 8 to 18 carbon atoms with the Z attached either terminally or pendently to the hydrocarbon chain and Z is anionic hydrophilic group containing sulfate or sulfonate attached directly to the carbon or through taurate, isethionate or succinate linkages.

Specific anionic surfactants that will improve the clarity of the elastomeric films resulting from the composition of the present invention include sulfuric acid esters, such as alkyl sulfates, ethoxylanted alkyl sulfates, sulfated triglyceride oils, e.g., sulfated castor oil; ester linked sulfonates, such as alkyl sufo esters (acyl isethionate), taurates and monoester sulfosuccinates; sulfosuccinamates; sulfonated ethers; paraffin sulfonates, i.e. sulfoxidation of n-paraffins via UV/SO₃ secondary alkane sulfonates (e.g. Hoechst™ SAS); α-olefin sulfonates; and linear alkylpolyether sulfonates (e.g., PPG Inc. Avanel™ S).

The following examples are presented to further illustrate the compositions of this invention. In the following examples, wet dispersions were cast into films one day after the dispersions were made and the film was allowed to dry for a minimum of seven days before testing. Durometer results were obtained by the method described in ASTM C661 "Indentation Hardness of Elastomeric-Type Sealants by Means of a Durometer". Tensile and elongation results were obtained by the method described in ASTM D412 "Vulcanized Rubber and Thermoplastic Rubbers and Thermoplastic Elastomers-Tension" using dumbell specimens with an L dimension equal to 12.7 mm (0.5 inch).

The clarity test method was developed to assign a numerical value to the translucency of crosslinked silicone elastomers prepared from silicone latex. The value reported is the thickness through which black printed letters can be read. The sealant is extruded between two graduated shims. The shims graduate from 2.5 mm to 5.1 mm (0.01" up to 0.20"). After two weeks at ambient conditions, the film was placed on white paper containing printing of rows of random letters. The measured thickness at which the letters became difficult to resolve is the reported clarity value. Maximum readings indicate that the letters were readable even at the thickest portion of the film.

### Example 1

4191 g of silanol terminated polydimethylsiloxane ("PDMS") having a number average molecular weight of 2,800 were mixed with a water surfactant solution containing 687.5 g of water and 706 g of a 10 weight percent secondary alkane sulfonate (HOSTAPUR™ SAS, Hoechst Celanese, Germany) solution in water that had been ion exchanged. This solution was mixed for 15 minutes with a cowls blade. This emulsion was then processed on a Sonic Corp™ (Stratford, Ct.) Sonolater for three passes through the equipment to prepare a stable oil in water emulsion. After 6 hours, the emulsion was loaded into a Ross™ Mixer (Charles Ross & Sons, Co. Hauppange, N.Y.) and 104 ml of 2N NaOH were mixed in to terminate the polymerization.

### Example 2

Using parts based on siloxane polymer, 100 parts of the emulsion polymer prepared in Example 1 were mixed with 0.5 part of stannous octoate and 1.0 part chloropropyltrimethoxysilane sequentially in a Semkit™ cartridge mixer (Courtaulds Aerospace, Indianapolis, IN.). The sample was allowed to gestate 70 minutes before 0.5 part of 2N NaOH was mixed in. Three other samples were prepared similarly except 2.0 parts 2N NaOH, 1.0 part 14-15% NH₄OH solution and 2.0 part 14-15% NH₄OH solution were used during the last mixing step.

These samples were placed in a freezer at -15 to -18°C., for 12-16 hours followed by 6-12 hours of thawing at room temperature. The samples were then tested and then cycled again.

| The results were: | F/T* cycles survived |
|---|---|
| 0.5 pt 2N NaOH | 0 |
| 2.0 pt 2N NaOH | 2 |
| 1.0 pt 14% NH₄OH | 9 |
| 2.0 pt 14% NH₄OH | 16 |

| | |
|---|---|
| *F/T = Freeze/Thaw | |

### Example 3

Using parts based on siloxane polymer, 100 parts of the emulsion polymer prepared in Example 1 were mixed with 0.5 part of stannous octoate and 5.0 mmol of glycidoxypropyltrimethoxysilane sequentially in a Semkit™ cartridge mixer. The sample was allowed to gestate 80 minutes, before 1.5 part of 14-15% NH₄OH solution were mixed in. Three other samples were prepared similarly except methacryloxypropyl-trimethoxysilane, methyltrimethoxysilane and vinyltri-methoxysilane were used as the crosslinker.

The samples were cycled in the freezer as described in Example 2.

| The results were: | F/T cycles survived |
|---|---|
| glycidoxypropyl-TMS | 0 |
| methacryloxypropyl-TMS | 0 |
| methyl-TMS | 18+ |
| vinyl-TMS | 21+ |

### Example 4

2250 g of silanol terminated PDMS having a number average molecular weight of 2,800, 221.4 g of a 10% Marlon™ PS (Huls, Germany) sodium salt solution, 221.4 g of a 10% Marlon™ PS sodium salt solution that had been ion exchanged to the free acid and 307.2 g of additional deionized water were mixed with a cowls blade. This emulsion premix was processed through a Sonic™ Corporation sonolater for two passes to form a stable oil in water emulsion. 30.9 g of 2N NaOH solution was mixed with the emulsion polymer in a Ross™ Mixer after 19 hours to terminate the emulsion polymerization.

### Example 5

Using parts based on siloxane polymer, 100 parts of the emulsion polymer prepared in Example 4 were mixed sequentially in a Whipmix™ laboratory mixer (Whipmix™ Corporation, Louisville, KY.) with 0.5 part stannous octoate and 2.0 part of a 50% aqueous solution of prehydrolyzed vinyltrimethoxysilane. The sample was allowed to gestate 90 minutes, before 1.5 part of 14-15% NH₄OH were mixed in. This dispersion survived 10 cycles of freezing and thawing as described in Example 2. A tack free silicone elastomer was formed upon water evaporation.

### Example 6

2250 g of silanol terminated PDMS having a number average molecular weight of 2,800, 232.5 g of a 10% Marlon™ PS sodium salt solution, 25.8 g of a 10% Marlon™ PS sodium salt solution that had been ion exchanged to the free acid and 491.7g of additional deionized water were mixed with a cowls blade. This emulsion premix was processed through a Sonic™ Corporation sonolater for two passes to form a stable oil in water emulsion. 3.2 g of 2N NaOH solution was mixed with the emulsion polymer in a Ross™ Mixer after 48 hours to terminate the emulsion polymerization.

### Example 7

Using parts based on siloxane polymer, 100 parts of the emulsion polymer prepared in Example 6 were mixed sequentially in a Whipmix™ laboratory mixer with 0.5 part stannous octoate and 2.0 part of a 50% aqueous solution of prehydrolyzed vinyltrimethoxysilane. The sample was allowed to gestate 30 minutes, before 1.5 part of 14-15% NH₄OH were mixed in. This dispersion still survived after 6 cycles of freezing and thawing as described in Example 2. A tack free silicone elastomer was formed upon water evaporation. It had a tensile strength of 0.31 MPa (45 psi) and an elongation of 1800%.

### Example 8

3000 g of silanol terminated PDMS having a number average molecular weight of 2,800, 300 g of a 10% Witcolate™ D51-53HA sodium salt solution (Witco, Charlotte, NC), 300 g of a 10% Witcolate™ D51-53HA sodium salt solution that had been ion exchanged to the free acid and 400 g of additional deionized water were mixed with a cowls blade. This emulsion premix was processed through a Sonic™ Corporation sonolater for two passes to form a stable oil in water emulsion. 32 g of 2N NaOH solution was mixed with the emulsion polymer in a Ross™ Mixer after 144 hours to terminate the emulsion polymerization.

### Example 9

Using parts based on siloxane polymer, 100 parts of the emulsion polymer prepared in Example 8 were mixed sequentially in a Whipmix™ laboratory mixer with 0.5 part stannous octoate and 1.0 part vinyltrimethoxysilane. The sample was allowed to gestate 30 minutes, before 1.5 part of 14-15% NH₄OH were mixed in. This dispersion still survived after 10 cycles of freezing and thawing as described in Example 2. A tack free silicone elastomer was formed upon water evaporation.

### Example 10

2250 parts of silanol terminated PDMS having a number average molecular weight of 2,800, 212 parts of a 10% Bioterge™ AS alpha olefin sulphonate sodium salt solution STEPAN™ (Naperville, IL), 212 parts of a 10% Bioterge™ AS sodium salt solution that had been ion exchanged to the free acid and 326 g of additional deionized water were mixed with a cowls blade. This emulsion premix was processed through a Sonic™ Corporation sonolater for two passes to form a stable oil in water emulsion. 32.2 g of 2N NaOH solution was mixed with the emulsion polymer in a Ross™ Mixer after 16 hours to terminate the emulsion polymerization.

### Example 11

Using parts based on siloxane polymer, 100 parts of the emulsion polymer prepared in Example 10 were mixed sequentially in a Whipmix™ laboratory mixer with 0.5 part stannous octoate and 1.0 part of vinyltrimethoxysilane. The sample was allowed to gestate 30 minutes, before 1.5 part of 14-15% NH₄OH were mixed in. This dispersion still survived 4 cycles of freezing and thawing as described in Example 2 before coagulating. A tack free silicone elastomer was formed upon water evaporation. It had a tensile strength of 0.22 MPa (32 psi) and an elongation of 1300%.

### Example 12

199.8 kg. (440 lbs.) of silanol terminated PDMS having a number average molecular weight of 2,800, 8.5 kg (18.8 lbs) of a Dupont™ (now Witco™) Duponal™ WAQE sodium lauryl sulfate 8.5 kg. (30% solids) solution, 7.6 kg. (16.7 lbs.) of a 10% Duponal™ WAQE solution that had been ion exchanged to the free acid and 54.5 kg (120 lbs.) of additional city water were mixed with a cowls blade. This emulsion premix was processed through Sonic™ Corporation sonolaters for two passes to form a stable oil in water emulsion. Then, 1.5 kg. (3.25 lbs) of a 2N NH₄OH solution was mixed with the emulsion polymer using a static mixer after 6 hours to terminate the emulsion polymerization.

### Example 13 Comparative Example)

Using parts based on siloxane polymer, 100 parts of the emulsion polymer prepared in Example 12 were mixed sequentially in a Whipmix™ laboratory mixer with 0.5 part stannous octoate and 1.0 part of chloropropyltrimethoxysilane. The sample was allowed to gestate 30 minutes, before 2.0 part of 14-15% NH₄OH were mixed in. This dispersion did not survive 1 cycle of freezing and thawing as described in Example 2 before coagulating. A tack free silicone elastomer was formed upon water evaporation.

### Example 14

2250 g of silanol terminated PDMS having a number average molecular weight of 2,800, 394 g of a 10% Stepan™ PAS-8S (Naperville, IL) sodium salt solution, 84 g of a 10% Stepan™ PAS-8S sodium salt solution that had been ion exchanged to the free acid and 313 g of additional deionized water were mixed with a cowls blade. This emulsion premix was processed through a Sonic™ Corporation sonolater for two passes to form a stable oil in water emulsion. 13.5 g of 2N NaOH solution were mixed with the emulsion polymer in a Ross™ Mixer after 15 hours to terminate the emulsion polymerization.

### Example 15 (Comparative Example)

Using parts based on siloxane polymer, 100 parts of the emulsion polymer prepared in Example 14 were mixed sequentially in a Whipmix™ laboratory mixer with 0.25 part stannous octoate and 0.5 part of vinyltrimethoxysilane. The sample was allowed to gestate 30 minutes, before 1.5 part of 14-15% NH₄OH were mixed in. This dispersion coagulated after 2 hours at -15°C.

### Example 16

2250 g of silanol terminated PDMS having a number average molecular weight of 2,800, 235 g of a 10% dodecylbenzylsulfonic acid (DBSA) sodium salt solution, 235 g of a 10% DBSA sodium salt solution that had been ion exchanged to the free acid and 280 g of additional deionized water were mixed with a cowls blade. This emulsion premix was processed through a Sonic™ Corporation sonolater for two passes to form a stable oil in water emulsion. 25 g of 2N NaOH solution were mixed with the emulsion polymer in a Ross™ Mixer after 16 hours to terminate the emulsion polymerization.

### Example 17 (Comparative Example)

Using parts based on siloxane polymer, 100 parts of the emulsion polymer prepared in Example 16 were mixed sequentially in a Whipmix™ laboratory mixer with 0.5 part stannous octoate and 1.0 part of vinyltrimethoxysilane. The sample was allowed to gestate 30 minutes, before 1.5 part of 14-15% NH₄OH were mixed in. This dispersion did not survive 1 cycle of freezing and thawing as described in Example 2. A tack free silicone elastomer was formed upon water evaporation. It had a tensile strength of 0.19 MPa (28 psi) and an elongation of 900%.

### Example 18

Using parts based on siloxane polymer, 100 parts of the Hoechst™ SAS stabilized emulsion polymer (prepared similarly to Example 1, except at 60 mmol surfactant/1000 g silicone oil) were mixed sequentially in a Whipmix™ laboratory mixer with 0.5 part stannous octoate and 1.0 part of chloropropyltrimethoxysilane. The sample was allowed to gestate 1 hour, followed by the addition of 3.2 parts of a 15% solution of Rohm and Haas™ TT-615 acrylic thickener. 1.5 part of 14-15% NH₄OH were mixed in to adjust the pH. This dispersion survived greater than 20 cycles of freezing and thawing as described in Example 2. A tack free silicone elastomer was formed upon water evaporation.

### Example 19

100 parts by weight of silanol ended linear PDMS, 1.78 parts of Hoechst Hostapur™ SAS60, 28.7 parts of deionized water and 1.17 parts of a 10 weight percent SAS (Hostapur™ SAS) solution in water that had been ion exchanged were combined. This solution was mixed for 15 minutes with a cowls blade. This premix was then processed on a Sonic™ Corp sonolater for two passes through the equipment to prepare a stable oil in water emulsion. After 73 hours, the emulsion was loaded into a Ross™ Mixer and 0.245 part of 2N NaOH was mixed in to terminate the polymerization by adjusting to pH 7.

This emulsion polymer was then transformed into a silicone latex by the mixing in a laboratory vacuum mixer (Whipmix™) 0.7 part of stannous octoate, 2.0 parts of a 50% solution of prehydrolyzed vinyltrimethoxysilane, gestating 10 minutes, followed by further mixing 1.7 parts of a 15% ammonium hydroxide solution.

The silicone latex dispersion was aged one week before casting films. The material dried to a crosslinked elastomer. Black letters on white paper could be read up to a thickness of 2.6 mm (103 mils).

### Example 20

100 parts, based on polydiorganosiloxane, of silanol terminated PDMS having a number average molecular weight of 2,800, 15.0 parts of deionized water and 18.3 parts of a 10 weight percent SAS (Hostapur™ SAS) solution in water that had been ion exchanged were combined. This solution was mixed for 15 minutes with a cowls blade. This premix was then processed through two Sonic™ Corp sonolaters connected in series to prepare a stable oil in water emulsion. After 8 hours, the emulsion was loaded into a Turello™ Mixer (Turello™ Mixer, Italy) and 4.0 parts of 2N NaOH were mixed in to terminate the polymerization by adjusting to pH 8-9. This emulsion polymer had a nonvolatile content of 70-72%, a number average molecular weight of 200,000 and an average particle size of 600 nanometers.

This emulsion polymer was then transformed into a silicone latex by mixing in a Turello™ Mixer 0.5 parts of stannous octoate, 1.0 part of vinyltrimethoxysilane, gestating for 30-60 minutes, followed by further mixing of 3.33 parts of a 15% dispersion of Acrysol™ TT-615 (Rohm and Haas, Philadelphia, PA) and 1.5 parts of a 15% ammonium hydroxide solution.

The silicone latex dispersion gestated 8 hours before casting films. The material dried to a crosslinked elastomer. This elastomer was placed in an oven at 150°C. for 670 hours. The elastomer lost 5.55 weight percent.

### Example 21 (Comparative Example)

100 parts, based on polydiorganosiloxane, of silanol ended PDMS linears, 27.5 parts of deionized water and 5.26 parts of a 30% aqueous solution of sodium lauryl sulfate (Duponal™ WAQE, Dupont, Wilmington DE) were combined. A filter bag containing Dowex™ HCR-W2 cation exchange resin was immersed into the premix for 40 minutes during agitation. It was removed prior to processing through two Sonic™ Corp sonolaters connected in series to prepare a stable oil in water emulsion. After 55 hours, the emulsion was loaded into a Turello™ Mixer and 1.46 parts of 2N NaOH were mixed in to terminate the polymerization by adjusting to pH 8-9. This emulsion polymer had a nonvolatile content of 72-73%, a number average molecular weight of 150,000 and an average particle size of 437 nanometers.

This emulsion polymer was then transformed into a silicone latex by mixing in a Turello™ Mixer 0.4 part of stannous octoate, 1.0 part of chloropropyltrimethoxysilane, gestating for 30-60 minutes, followed by further mixing of 0.5 part of a 95% solution of 2-amino-2-methyl-1-propanol (AMP-95, Angus™ Chemical Co., Buffalo Grove Ill.)

The silicone latex dispersion was stored overnight before casting films. The material dried to a crosslinked elastomer. This elastomer was placed in an oven at 150™C. for 670 hours. The elastomer lost 17.6 weight percent.

## Claims

1. A method of making an aqueous dispersion comprising the steps of:
I. preparing a high molecular weight polymeric dispersion comprising the steps of:
contacting a hydroxyl endblocked siloxane oligomer or oligomer mixture with a water/surfactant mixture to form a premixture, wherein said surfactant is selected from the group consisting of:
a) anionic surfactants which are not alkyl sulfates, linear alkylbenzene sulfonates, alkyl sulfonates and taurates,
b) anionic surfactants which do not form siloxane redistribution catalysts at temperatures above 100°C., and
c) anionic surfactants which when said water has been evaporated from the polymeric dispersion, the resulting composition has a crosslinked siloxane phase having a refractive index and a surfactant/residual water phase having a refractive index, and the refractive index of the crosslinked siloxane phase matches the refractive index of the surfactant/residual phase,
mixing the premixture at a high shear to form an emulsion,
allowing the premixture to polymerize to form an emulsion polymer, and
adding a neutralizing agent to the emulsion polymer, whereby the premixture has been acid catalyzed prior to or after mixing the premixture to form an emulsion; and
II. crosslinking the composition by adding a crosslinker and a catalyst.

2. The method of claim 1 comprising the additional step of evaporating the water from the dispersion.

3. The method of claim 1 comprising the additional step of adding at least one filler.

4. The method of claim 1 comprising the additional step of adding at least one thickener.

5. The method of claim 1 comprising the additional step of adding at least one reinforcing agent.

6. The method of claim 1 comprising the additional step of adding at least one adhesion promoter.

7. The method of claim 1 comprising the additional step of adding at least one stabilizer.

8. The method of claim 1 wherein the surfactant is selected from the group consisting of sulfosuccinamates, paraffin sulfonates, phosphoric esters and carboxylates.

9. The polymeric dispersion obtainable by the method of claim 1.
